# FASCICULE DE BREVET EUROPEEN

(11) **EP 3 388 218 B1**
(45) Date de publication et mention de la délivrance du brevet: **26.04.2023**
(21) Numéro de dépôt: 18166395.6
(22) Date de dépôt: 09.04.2018
(51) Int. Cl.: B29C 45/14, F21S 41/26, F21S 41/29, B29K 83/00

(54) **SURMOULAGE D'UN ÉLÉMENT OPTIQUE SUR UN CADRE THERMOPLASTIQUE**
ANSPRITZEN EINES OPTISCHEN ELEMENTS AUF EINEM THERMOPLASTIKRAHMEN
OVERMOLDING OF AN OPTICAL ELEMENT ON A THERMOPLASTIC FRAME

(30) Priorité: 12.04.2017 FR 1753222
(43) Date de publication de la demande: 17.10.2018
(73) Titulaire: Valeo Vision, 93012 Bobigny Cedex (FR)
(72) Inventeur: REVOL, Damien, 93012 Bobigny Cedex (FR); LOZANO, Anthony, 93012 Bobigny Cedex (FR); PENICHOU, Vincent, 93012 Bobigny Cedex (FR)
(74) Mandataire: Valeo Visibility

(56) Documents cités:
- WO-A1-2009/129123
- US-A1- 2007 117 248
- US-A1- 2017 023 762

## Description

La présente invention concerne le domaine de l'assemblage d'un élément sur un cadre pouvant servir de support audit élément, et plus particulièrement l'assemblage d'un élément sur un cadre par surmoulage. L'élément à assembler sur le cadre peut être un élément optique tel qu'une lentille par exemple.

La présente invention trouve des applications dans le domaine automobile notamment dans le domaine de dispositifs de projection de véhicule automobile dans des applications d'éclairage et/ou de signalisation. Une lentille surmoulée sur un cadre peut ainsi constituer un élément d'un dispositif de projection de véhicule automobile.

Des méthodes connues de surmoulage d'élément sur un cadre prévoient l'assemblage en une seule pièce d'un élément et d'un cadre lui servant de support. Le but de telles méthodes est d'obtenir une seule pièce à partir de deux pièces distinctes. US 2007/117248 A1 concerne un boîtier de dispositif électronique ainsi que des procédés de formation du boîtier.

Cependant, ces méthodes ne prévoient pas d'empêcher les déplacements de l'élément surmoulé par rapport au cadre lui servant de support.

En effet, une fois l'élément surmoulé sur le cadre, il peut exister ou se créer, du fait de différence de température ou d'une usure mécanique, un jeu entre l'élément surmoulé et le cadre associé ou une déformation de l'un de ces éléments.

Par conséquent, il peut subsister des degrés de liberté dans la liaison entre l'élément surmoulé et cadre lui servant de support.

De plus, certains matériaux se déformant avec la chaleur tels que les plastiques par exemple, peuvent engendrer des mouvements supplémentaires de l'élément surmoulé par rapport au cadre, voire entraîner une rupture de l'assemblage. En effet, les variations de température peuvent déformer à la fois l'élément surmoulé et le cadre servant de support.

Il existe donc un besoin de limiter voire d'empêcher le mouvement d'un élément surmoulé par rapport à un cadre lui servant de support et ainsi assurer un maintien de l'assemblage élément surmoulé et cadre associé.

La présente invention vient améliorer la situation.

Un premier aspect de l'invention concerne un assemblage (100) optique d'un module lumineux notamment d'éclairage et/ou de signalisation, en particulier pour véhicule automobile, comprenant :
- un élément optique (102);
- un cadre (101);

ledit élément optique étant surmoulé sur le cadre,
ledit cadre étant conformé de manière à réaliser une accroche mécanique entre le cadre et l'élément optique suite au surmoulage de l'élément optique sur le cadre.

On entend par « élément optique » un élément permettant de modifier la trajectoire de rayons lumineux ou les propriétés de la lumière. Par exemple, un élément optique peut correspondre à un miroir ou une lentille en matière thermoplastique telle que le polycarbonate (PC), le polyméthacrylate (PPMA), le copolymère de cyclooléfine (COC), le copolymère de cyololéphine (COP) et le silicone.

On entend par « cadre » un élément servant de support à l'élément optique.

On entend par « surmouler » l'action consistant à réaliser un moulage de l'élément optique directement sur le cadre. Il existe plusieurs techniques de surmoulage. Par exemple en plasturgie, le surmoulage consiste à venir injecter du plastique sur un élément servant de support. L'élément de support peut être constitué de divers matériaux : métal, plastique ou céramique par exemple.

Ainsi l'élément optique et le cadre constituent une seule pièce et l'élément optique épouse la géométrie du cadre. Cela élimine l'utilisation de pièces d'interface et permet d'éviter de multiples étapes d'assemblage. Le nombre de pièces du produit final est réduit et il n'y a pas d'assemblage visible entre l'élément optique et le cadre. Cela permet également d'obtenir une variété de formes plus importante pour l'élément optique.

Selon un mode de réalisation de l'invention, au moins une surface de contact du cadre avec l'élément optique peut comprendre au moins un trou, dans lequel le trou réalise l'accroche mécanique entre le cadre et l'élément optique suite au surmoulage de l'élément optique sur le cadre.

Ainsi, l'adhésion physique entre le cadre et l'élément optique surmoulé est renforcée. Les degrés de liberté correspondant aux mouvements relatifs indépendants entre l'élément optique et le cadre sont limités.

Selon un mode de réalisation de l'invention, ledit au moins un trou comprend un trou traversant de manière à ce que, suite au surmoulage, l'élément optique entoure partiellement le cadre.

Ainsi, l'utilisation d'un trou traversant permet de limiter les mouvements de l' l'élément optique par rapport au cadre. En effet, dans le cas d'un élément optique en silicone, l'élément optique à tendance à se mouvoir. Ce phénomène est dû au fait que le silicone est un matériau qui reste souple et maintient difficilement sa géométrie. Ces mouvements peuvent aussi être provoqués par des coefficients de dilatation différents lors de l'exposition à la chaleur.

Selon un mode de réalisation de l'invention, le trou traversant peut posséder une section constante.

Ainsi, l'opération consistant à effectuer les trous n'introduit pas de difficultés.

Selon un mode de réalisation de l'invention, ledit au moins trou peut posséder une section croissante non constante.

Ainsi, l'adhésion mécanique entre l'élément optique et le cadre est renforcée.

Selon un mode de réalisation de l'invention, ledit au moins trou peut posséder une section non-constante en forme de T.

Alternativement, la section croissante non constante peut avoir un profil linéaire.

Selon un mode de réalisation de l'invention, le cadre peut comprendre un trou central agencé de manière à permettre à une lumière de traverser l'élément optique.

Ainsi, lors du surmoulage de l'élément optique sur le cadre, l'élément optique vient se loger dans le trou central.

Selon un mode de réalisation de l'invention, le cadre peut comprendre au moins huit trous répartis sensiblement uniformément autour du trou central.

Ainsi la liaison de l'élément optique sur le cadre est renforcée.

Selon un mode de réalisation de l'invention, le cadre peut comprendre au moins seize trous répartis sensiblement uniformément autour du trou central.

Ainsi la liaison de l'élément optique sur le cadre est renforcée.

Selon un mode de réalisation de l'invention, le cadre peut comprendre au moins vingt trous répartis sensiblement uniformément autour du trou central.

Ainsi la liaison de l'élément optique sur le cadre est renforcée.

Selon un mode de réalisation de l'invention, au moins une surface de contact du cadre avec l'élément optique peut comprendre au moins une aspérité, dans lequel l'aspérité réalise l'accroche mécanique entre le cadre et l'élément optique suite au surmoulage de l'élément optique sur le cadre.

Ainsi, l'adhésion mécanique entre l'élément optique et le cadre est renforcée.

Selon un mode de réalisation de l'invention, ledit cadre peut être réalisé en une matière thermoplastique et l'élément optique peut être en silicone.

Ainsi, la liaison mécanique entre l'élément optique et le cadre est renforcée. En effet dans le cas où le cadre est réalisé en matière thermoplastique et l'élément optique est réalisé en silicone ou dans un thermoplastique différent, il existe peu d'adhésion chimique. De plus, le silicone a un coefficient de dilatation thermique élevé et les matières thermoplastiques se déforment également en fonction de la température. Cela peut engendrer un certain jeu mécanique entre les deux éléments : cadre et élément optique. Par conséquent, le fait de surmouler l'élément optique réalisé en silicone sur un cadre en matière thermoplastique, où le cadre est conforme à réaliser une accroche mécanique, permet de limiter les mouvements au sein de l'assemblage.

Selon un mode de réalisation, ledit cadre peut être en outre relié à un second élément optique, de manière à réaliser une fonction optique par agencement du second élément optique relativement à l'élément optique.

Un deuxième aspect de l'invention concerne un procédé de fabrication d'un assemblage d'un élément optique, dans une matière telle que le polycarbonate (PC), le polyméthacrylate (PPMA), le copolymère de cyclooléfine (COC), le copolymère de cyololéphine (COP) ou le silicone avec un cadre, dans lequel, le procédé comporte les étapes de :
- fabrication du cadre ;
- surmoulage de l'élément optique sur ledit cadre moulé ;

Le cadre étant fabriqué de manière à réaliser une accroche mécanique entre le cadre et l'élément optique lors de l'étape de surmoulage de l'élément optique sur le cadre.

Selon un mode de réalisation, la réalisation du cadre comprend le perçage d'au moins un trou, dans lequel le trou réalise l'accroche mécanique entre le cadre et l'élément optique suite au surmoulage de l'élément optique sur le cadre.

Selon un mode de réalisation, ledit au moins un trou comprend un trou traversant de manière à ce que, suite au surmoulage, l'élément optique entoure partiellement le cadre.

Selon un mode de réalisation, ledit trou traversant possède une section constante.

Selon un mode de réalisation, ledit au moins trou possède une section croissante non constante.

Selon un mode de réalisation, ledit au moins trou possède une section non-constante en forme de T.

Selon un mode de réalisation, la section croissante non constante a un profil linéaire.

Selon un mode de réalisation, la réalisation du cadre comprend en outre le perçage d'un trou central agencé de manière à permettre à une lumière de traverser l'élément optique.

Selon un mode de réalisation, la réalisation du cadre comprend en outre le perçage d'au moins huit trous répartis sensiblement uniformément autour du trou central.

Selon un mode de réalisation, la réalisation du cadre comprend le perçage d'au moins seize trous répartis sensiblement uniformément autour du trou central.

Selon un mode de réalisation, la réalisation du cadre comprend le perçage d'au moins vingt trous répartis sensiblement uniformément autour du trou central.

Selon un mode de réalisation, la réalisation du cadre est effectuée à l'aide d'une matière thermoplastique et le surmoulage dudit élément optique sur ledit cadre est effectué à l'aide d'une matière silicone.

Selon un mode de réalisation, le dit procédé peut comprendre en outre une étape de liaison d'un second élément optique audit cadre, de manière à réaliser une fonction optique par agencement du second élément optique relativement à l'élément optique.

Un troisième aspect de l'invention concerne un module lumineux comprenant un assemblage (100) optique, en particulier pour véhicule automobile, comprenant :
- un élément optique (102);
- un cadre (101);

ledit élément optique étant surmoulé sur le cadre,
ledit cadre étant conformé de manière à réaliser une accroche mécanique entre le cadre et l'élément optique suite au surmoulage de l'élément optique sur le cadre.

Un quatrième aspect de l'invention concerne un dispositif lumineux comprenant un module lumineux et/ou assemblage tel que mentionné ci-dessus.

Un cinquième aspect de l'invention concerne un véhicule comprenant un module lumineux et/ou dispositif lumineux et/ou assemblage tel que mentionné précédemment.

Un dispositif lumineux peut être un projecteur avant ou un feu arrière ou peut encore être un dispositif d'éclairage adapté pour l'éclairage intérieur du véhicule automobile.

D'autres caractéristiques et avantages de l'invention apparaîtront à l'examen de la description détaillée ci-après, et des dessins annexés sur lesquels:
- la figure 1 illustre un assemblage, selon un mode de réalisation de l'invention ;
- la figure 2 représente une vue en coupe d'un assemblage, selon un mode de réalisation de l'invention ;
- la figure 3 représente une vue en coupe d'un assemblage, selon un mode de réalisation de l'invention ;
- les figure 4A, 4B et 4C représente plusieurs vues en coupe, selon différents modes de réalisation de l'invention ;
- les figure 5A, 5B et 5C représente plusieurs modes de réalisation différents de l'invention ;
- la figure 6 est un diagramme illustrant les étapes d'un procédé selon un mode de réalisation de l'invention.

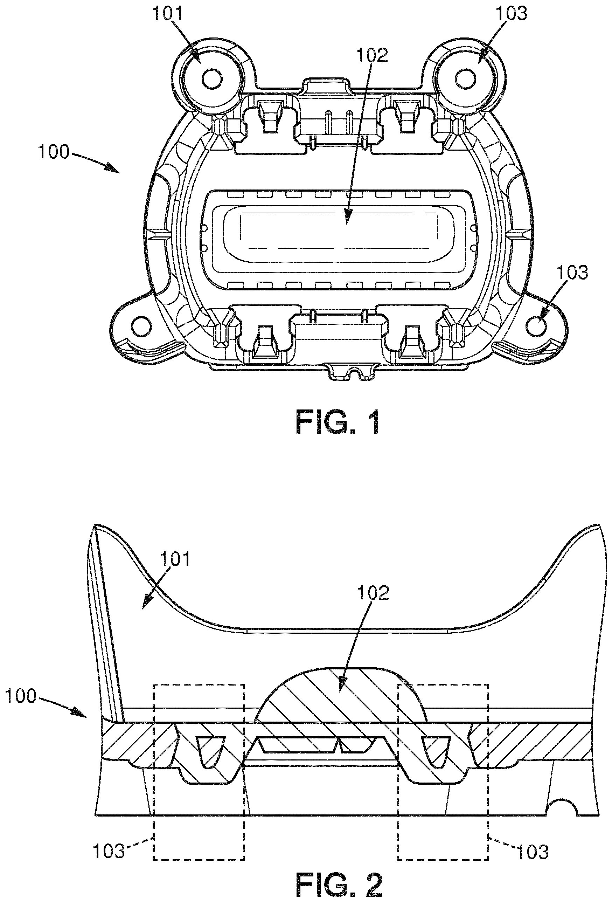

La figure 1 représente un assemblage 100 comprenant un élément optique 102 et un cadre 101 servant de support à l'élément optique 102. L'élément optique 102 est de préférence en silicone et peut par exemple être une lentille. Aucune limitation n'est attachée à la fonction optique remplie par l'élément optique 102. L'élément optique 102 est surmoulé sur le cadre 101 de manière à former une seule pièce : l'assemblage 100.

De manière avantageuse, le cadre 101 peut être pourvu d'un trou central autour duquel l'élément optique 102 est surmoulé afin de permettre à une lumière incidente de traverser l'élément optique 102. Le cadre peut présenter des supports de fixation 103 permettant d'intégrer l'assemblage 100 dans un module lumineux, par exemple d'éclairage et/ou de signalisation pour véhicule automobile. La forme et la disposition des supports de fixation 103 sur la figure 1 constituent uniquement un exemple de fixation de l'assemblage 100.

La forme du cadre 101 selon l'invention permet l'assemblage avec l'élément optique 102. En effet, nous verrons dans la suite que la conception du cadre 101 influence la fixation de l'élément optique 102 suite au surmoulage de l'élément optique 102 sur le cadre 101.

Le cadre 101 servant de support à l'élément optique 102 peut être moulé, par exemple dans le cas où le cadre 101 est réalisé en matière thermoplastique. Toutefois, aucune limitation n'est attachée à la manière de réaliser le cadre.

La conception d'un moule pour le cadre 101 présentant la géométrie et les caractéristiques décrites ci-après et permettant la fixation de l'élément optique 102 suite à l'étape de surmoulage, peut être réalisée au préalable. Le cadre 101 peut également être une pièce en métal, réalisé par exemple par usinage.

La figure 1 représente plus particulièrement une vue dans un plan perpendiculaire à des rayons lumineux atteignant l'élément optique 102, de l'assemblage 100 comprenant le cadre 101 et l'élément optique 102.

La figure 2 représente une vue en coupe de l'assemblage 100 comprenant un cadre 101 et un élément optique 102, selon un mode de réalisation de l'invention. Plus particulièrement, la figure 2 représente une vue en coupe issue d'une représentation en trois dimensions de l'assemblage 100 selon un plan perpendiculaire au plan de la figure 1. On distingue sur la figure 2 que l'élément optique 102 entoure complètement le cadre aux emplacements 103. Les emplacements 103 correspondent à des trous traversants dans le cadre 101. En effet, lors du surmoulage de l'élément optique 102 sur le cadre 101, l'élément optique 102 surmoulé vient complètement entourer le cadre 101 aux emplacements 103. Ceci a pour but de renforcer l'adhésion mécanique entre le cadre 101 et l'élément optique 102, et d'empêcher que l'élément optique 102 ne se désolidarise du cadre 101. La manière dont l'élément optique 102 vient entourer le cadre 101 aux deux emplacements 103 est identique. Cependant, rien n'impose que la conception du cadre ne présente deux trous traversants et identiques. On peut considérer les éléments 103 de la figure 2 en tant qu'accroche mécanique au sens de l'invention.

On distingue sur la figure 2 qu'il n'y a pas de fixation visible entre l'élément optique 102 et le cadre 101, l'assemblage 100 constitue bien une seule et unique pièce.

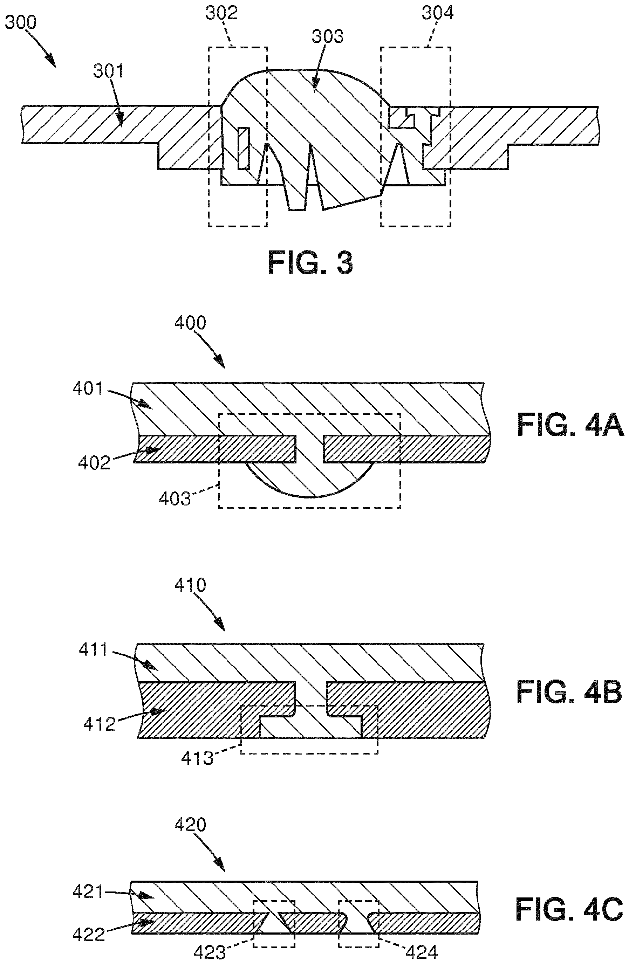

La figure 3 représente une vue en coupe d'un assemblage 300, selon un mode de réalisation de l'invention. L'assemblage 300 comprend un élément optique 303 et un cadre 301 lui servant de support. Les éléments 302 et 304 de la figure 3 représentent deux types d'accroches mécaniques réalisées selon un arrangement différent. En effet, de la même manière qu'à la figure 2, l'accroche mécanique 302 consiste à entourer complètement le cadre 301 avec l'élément optique 303, ce qui correspond à un trou traversant.

L'accroche mécanique 304 est différente de l'accroche mécanique 302. En effet, pour l'accroche mécanique 304, le cadre 301 est conformé de manière à ce que l'élément optique 303 pénètre le cadre 301 selon la géométrie illustrée sur la figure 3. Par conséquent, la forme du cadre 301 est préalablement réalisée de manière à permettre une telle d'accroche mécanique et ainsi fournir à l'élément optique 303 l'espace requis au sein du cadre 301 pour s'y insérer. Dans l'exemple de la figure 3, les accroches mécaniques diffèrent au sein de l'assemblage. Chacune de ces accroches mécaniques remplit une fonction différente. Les accroches mécaniques 302 et 304 peuvent chacune empêcher un mouvement différent et ainsi maintenir le contact et limiter le jeu mécanique entre l'élément optique 303 et le cadre 301 de manière à former une seule pièce : l'assemblage 300.

Plusieurs paramètres sont pris en compte pour la géométrie et la disposition des accroches mécaniques, tels que la température par exemple. En effet, pour un élément optique réalisé en silicone, le coefficient de dilatation thermique est élevé. Un cadre réalisé en matière thermoplastique est également influencé par les variations de température. La variation de température déforme à la fois le cadre et l'élément optique. Il est par conséquent préférable de prendre en compte ce facteur pour éviter la déformation thermique de l'élément optique ainsi que du cadre lui servant de support. Par exemple dans le cas d'intégration d'un tel assemblage au sein d'un dispositif de projection pour véhicule automobile, les températures peuvent subir des variations de -40°C à +120°C.

De plus, dans le cas d'un cadre en matière thermoplastique et d'un élément optique en silicone ou matière thermoplastique différente, il existe une faible adhésion chimique entre les deux éléments. Il est donc avantageux d'imposer une certaine géométrie sur le cadre servant de support à l'élément optique afin de réaliser des accroches mécaniques empêchant tout mouvement non prévu, comme le prévoit la présente invention.

Les figures 4A à 4C illustrent des accroches mécaniques entre élément optique et cadre selon des modes de réalisation de l'invention. Seule l'accroche mécanique est à chaque fois représentée, et on comprendra que seule une partie de l'assemblage selon l'invention est ainsi représentée.

La figure 4A représente une vue en coupe d'une accroche mécanique selon un mode de réalisation de l'invention. L'assemblage 400 comprend un cadre 402 et un élément optique 401. On distingue également une accroche mécanique 403 permettant le maintien du contact entre l'élément optique 401 et le cadre 402. Cette accroche mécanique 403 est réalisée à l'aide d'un trou traversant à section constante au sein du cadre 402, l'élément optique 401 pouvant ainsi traverser complètement le cadre 402.

On remarque sur la figure 4A que l'accroche mécanique 403 diffère des accroches mécaniques représentées sur les figures précédentes. Varier la géométrie et les caractéristiques du cadre 402 permet de multiples possibilités concernant la conception de l'élément optique ainsi que la conception des accroches mécaniques. En effet, lors du surmoulage l'élément optique 401 vient épouser la géométrie du cadre 402.

La figure 4B représente une vue en coupe d'une accroche mécanique 413 selon un mode de réalisation de l'invention. L'assemblage 410 comprend un cadre 412 et un élément optique 411. L'accroche mécanique 413 permet le maintien du contact entre l'élément optique 411 et le cadre 412. L'accroche mécanique 413 correspond à un trou à section non constante. Le trou représenté est borgne sur la figure 4B, mais l'invention prévoit également l'utilisation d'un trou traversant à section non constante. La section du trou au sein du cadre 412 est croissante en forme de T. Les surfaces de contact entre l'élément optique et le cadre diffèrent des figures précédentes.

Il est possible de concevoir sur un logiciel de conception assisté par ordinateur les surfaces de contact entre un élément optique et un cadre lui servant de support pour caractériser cet ensemble en tant qu'assemblage. En effet, une fois les surfaces de contact ainsi que les contours de l'élément optique et du cadre dessinés dans le plan, il est possible par extrusion d'obtenir un modèle représentant l'assemblage en trois dimensions. Ce modèle de l'assemblage tridimensionnel peut ensuite être utilisé pour la fabrication.

La figure4C représente une vue en coupe d'accroches mécaniques 423 et 424 selon un mode de réalisation de l'invention. L'assemblage 420 comprend un cadre 422 et un élément optique 421. L'accroche mécanique 423 correspond à un trou à section non constante au sein du cadre 422. Le trou correspondant à l'accroche mécanique 423 est borgne sur la figure 4C, mais l'invention prévoit également l'utilisation d'un trou traversant à section non constante. Plus précisément, l'accroche mécanique 423 correspond à un trou dont la section est croissante avec un profil linéaire.

L'accroche mécanique 424 correspond à un trou à section non constante au sein du cadre 422. Le trou correspondant à l'accroche mécanique 424 est borgne sur la figure 4C, mais l'invention prévoit également l'utilisation d'un trou traversant à section non constante. La section du trou correspondant à l'accroche mécanique 424 n'a pas un profil exactement linéaire. La section débute par un profil parabolique puis un profil linéaire.

Ainsi, en fonction de l'application, du type de matériau employé et des contraintes imposés, la présente invention permet un haut niveau de précision concernant le type et le nombre d'accroches mécaniques pour la conception du cadre.

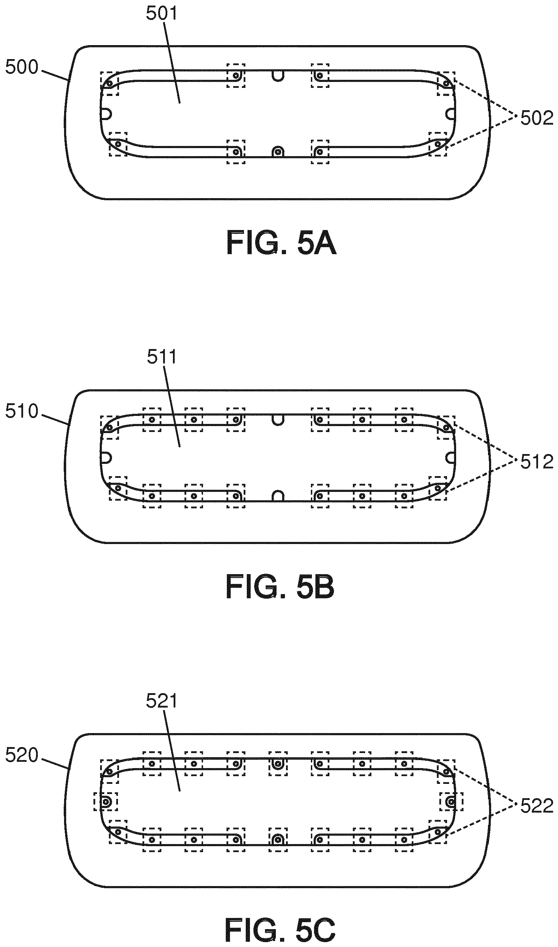

La figre 5A représente un mode de réalisation d'un assemblage selon l'invention. Plus précisément, la figure 5A représente un cadre 500 servant de support pour le surmoulage d'un élément optique, non représenté sur la figure. Le cadre 500 comporte un trou central 501 permettant à une lumière incidente de traverser l'élément optique lorsque ce dernier est surmoulé sur le cadre 500. Le cadre 500 peut comprendre au moins huit trous 502, en particulier huit trous, répartis uniformément autour du trou central 501 et permettant un maintien de l'élément optique une fois surmoulé sur le cadre. Les trous 502 peuvent être de tailles sensiblement identiques et peuvent être disposés sur des languettes appartenant au cadre 500. Les trous 502 sont réalisés sur le cadre 500 préalablement à l'étape de surmoulage de l'élément optique sur le cadre 500.

La figure 5B représente un mode de réalisation d'un assemblage selon l'invention. Plus précisément la figure 5B représente un cadre 510 servant de support pour le surmoulage d'un élément optique, non représenté sur la figure. Le cadre 510 comporte un trou central 511 permettant à une lumière incidente de traverser l'élément optique lorsque ce dernier est surmoulé sur le cadre 510. Le cadre 510 peut comprendre au moins seize trous, en particulier seize trous, répartis uniformément autour du trou central 511 et permettant un maintien de l'élément optique une fois surmoulé sur le cadre. Les trous 512 peuvent être de tailles sensiblement identiques et disposés sur des languettes appartenant au cadre 510. L'augmentation du nombre de trous au sein du cadre permet d'augment l'adhésion mécanique entre le cadre et l'élément optique une fois celui-ci surmoulé sur le cadre.

La figure 5C représente un mode de réalisation d'un assemblage selon l'invention. Plus précisément la figure 5C représente un cadre 520 servant de support pour le surmoulage d'un élément optique, non représenté sur la figure. Le cadre 520 comporte un trou central 521 permettant à une lumière incidente de traverser l'élément optique lorsque ce dernier est surmoulé sur le cadre 520. Le cadre 520 peut comprendre au moins vingt trous, en particulier vingt trous 521 répartis uniformément autour du trou central 521 et permettant un maintien de l'élément optique une fois surmoulé sur le cadre. Les trous 522 peuvent ne pas être tous de tailles sensiblement identiques. En effet, seize trous 522 peuvent être de tailles sensiblement identiques, similairement à la figure 5B et quatre trous supplémentaires 522 de tailles inférieures sont insérés sur des languettes de taille inférieure également.

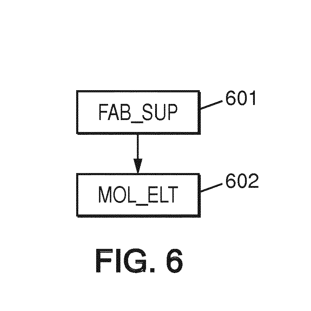

La figure 6 représente un diagramme illustrant les étapes d'un procédé selon un mode de réalisation de l'invention. Plus précisément, la figure 6 comprend deux étapes 601 et 602 d'un procédé de fabrication d'un assemblage d'un élément optique, de préférence en silicone avec un cadre lui servant de support. La première étape 601 (FAB_SUP) correspond à la fabrication du cadre. Le cadre peut également être considéré comme un support. Le cadre peut être fabriqué par moulage dans le cas d'un cadre en matière thermoplastique. Le cadre peut également être un élément en métal et donc être fabriquer par usinage. L'étape 502 (MOL_ELT) correspond à une étape de surmoulage de l'élément optique sur le cadre. Le but de cette étape est de former à partir de deux pièces distinctes que sont l'élément optique et le cadre une seule pièce : l'assemblage. Quel que soit le procédé de fabrication du cadre lors de l'étape 601, le cadre est conformé de manière à réaliser une accroche mécanique entre le cadre et l'élément optique lors du surmoulage de l'élément optique sur le cadre. Le cadre est donc conçu avec une géométrie particulière de manière à fournir les accroches mécaniques pour l'élément optique en fonction de l'application dudit assemblage.

Bien entendu, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

## Revendications

1. Assemblage (100) optique d'un module lumineux d'éclairage et/ou de signalisation, de véhicule automobile, comprenant :
- un élément optique (102, 303, 401, 411, 421);
- un cadre (101, 301, 402, 412, 422);
ledit élément optique étant surmoulé sur le cadre,
ledit cadre étant conformé de manière à réaliser une accroche mécanique entre le cadre et l'élément optique suite au surmoulage de l'élément optique sur le cadre,
au moins une surface de contact du cadre (101, 301, 402, 412, 422) avec l'élément optique (102, 303, 401, 411, 421) comprenant au moins un trou, le trou réalisant l'accroche mécanique entre le cadre et l'élément optique suite au surmoulage de l'élément optique sur le cadre,
**caractérisé en ce que** ledit au moins un trou comprend un trou traversant de manière à ce que, suite au surmoulage, l'élément optique (102, 303, 401, 411, 421) entoure partiellement le cadre (101, 301, 402, 412, 422),
et **en ce que** le cadre comprend un trou central agencé de manière à permettre à une lumière de traverser l'élément optique.

2. Assemblage selon la revendication 1, dans lequel le cadre (101, 301, 402, 412, 422) comprend au moins huit trous répartis sensiblement uniformément autour du trou central.

3. Assemblage selon la revendication 2, dans lequel le cadre (101, 301, 402, 412, 422) comprend au moins seize trous répartis sensiblement uniformément autour du trou central.

4. Assemblage selon la revendication 3, dans lequel le cadre (101, 301, 402, 412, 422) comprend au moins vingt trous répartis sensiblement uniformément autour du trou central.

5. Assemblage selon l'une des revendications précédentes, dans lequel au moins une surface de contact du cadre avec l'élément optique (102, 303, 401, 411, 421) comprend au moins une aspérité, dans lequel l'aspérité réalise l'accroche mécanique entre le cadre (101, 301, 402, 412, 422) et l'élément optique suite au surmoulage de l'élément optique sur le cadre.

6. Assemblage selon l'une des revendications précédentes, dans lequel ledit cadre (101, 301, 402, 412, 422) est réalisé en une matière thermoplastique et l'élément optique est en silicone.

7. Assemblage selon l'une des revendications précédentes, dans lequel ledit cadre (101, 301, 402, 412, 422) est en outre relié à un second élément optique, de manière à réaliser une fonction optique par agencement du second élément optique relativement à l'élément optique.

8. Procédé de fabrication d'un assemblage optique d'un module lumineux, notamment d'éclairage et/ou de signalisation, en particulier pour véhicule automobile, dans lequel, le procédé comporte les étapes de :
- réalisation d'un cadre (601) ;
- surmoulage d'un élément optique sur ledit cadre (602) ;
ledit cadre étant réalisé de manière à réaliser une accroche mécanique entre le cadre et l'élément optique lors de l'étape de surmoulage de l'élément optique sur le cadre
la réalisation du cadre comprenant le perçage d'au moins un trou, dans lequel le trou réalise l'accroche mécanique entre le cadre et l'élément optique suite au surmoulage de l'élément optique sur le cadre, et
ledit au moins un trou comprenant un trou traversant de manière à ce que, suite au surmoulage, l'élément optique entoure partiellement le cadre,
la réalisation du cadre comprenant en outre le perçage d'un trou central agencé de manière à permettre à une lumière de traverser l'élément optique.

9. Procédé selon la revendication 8, dans lequel la réalisation du cadre (601) est effectuée à l'aide d'une matière thermoplastique et le surmoulage dudit élément optique sur ledit cadre (602) est effectuée à l'aide silicone.

10. Procédé selon l'une des revendications 8 à 9 comprenant en outre une étape de liaison d'un second élément optique audit cadre, de manière à réaliser une fonction optique par agencement du second élément optique relativement à l'élément optique.

## Patentansprüche

1. Optische Anordnung (100) eines Lichtmoduls zur Beleuchtung und/oder Signalisierung, eines Kraftfahrzeugs, die Folgendes beinhaltet:
- ein optisches Element (102, 303, 401, 411, 421);
- einen Rahmen (101, 301, 402, 412, 422);
wobei das optische Element auf den Rahmen angespritzt ist,
wobei der Rahmen so ausgebildet ist, dass er nach dem Anspritzen des optischen Elements auf den Rahmen eine mechanische Befestigung zwischen dem Rahmen und dem optischen Element herstellt,
wobei mindestens eine Kontaktoberfläche des Rahmens (101, 301, 402, 412, 422) mit dem optischen Element (102, 303, 401, 411, 421) mindestens eine Öffnung beinhaltet, wobei die Öffnung nach dem Anspritzen des optischen Elements auf den Rahmen die mechanische Befestigung zwischen dem Rahmen und dem optischen Element herstellt,
**dadurch gekennzeichnet, dass** die mindestens eine Öffnung eine Durchgangsöffnung beinhaltet, sodass das optische Element (102, 303, 401, 411, 421) den Rahmen (101, 301, 402, 412, 422) nach dem Anspritzen teilweise umgibt,
und dass der Rahmen eine mittige Öffnung beinhaltet, die so eingerichtet ist, dass einem Licht der Durchgang durch das optische Element ermöglicht wird.

2. Anordnung nach Anspruch 1, wobei der Rahmen (101, 301, 402, 412, 422) mindestens acht Öffnungen beinhaltet, die im Wesentlichen gleichmäßig um die mittige Öffnung herum verteilt sind.

3. Anordnung nach Anspruch 2, wobei der Rahmen (101, 301, 402, 412, 422) mindestens sechzehn Öffnungen beinhaltet, die im Wesentlichen gleichmäßig um die mittige Öffnung herum verteilt sind.

4. Anordnung nach Anspruch 3, wobei der Rahmen (101, 301, 402, 412, 422) mindestens zwanzig Öffnungen beinhaltet, die im Wesentlichen gleichmäßig um die mittige Öffnung herum verteilt sind.

5. Anordnung nach einem der vorhergehenden Ansprüche, wobei mindestens eine Kontaktoberfläche des Rahmens mit dem optischen Element (102, 303, 401, 411, 421) mindestens eine Unebenheit beinhaltet, wobei die Unebenheit nach dem Anspritzen des optischen Elements auf den Rahmen die mechanische Befestigung zwischen dem Rahmen (101, 301, 402, 412, 422) und dem optischen Element herstellt.

6. Anordnung nach einem der vorhergehenden Ansprüche, wobei der Rahmen (101, 301, 402, 412, 422) aus einem thermoplastischen Material hergestellt ist und das optische Element aus Silikon besteht.

7. Anordnung nach einem der vorhergehenden Ansprüche, wobei der Rahmen (101, 301, 402, 412, 422) ferner mit einem zweiten optischen Element verbunden ist, um durch die Einrichtung des zweiten optischen Elements relativ zu dem optischen Element eine optische Funktion bereitzustellen.

8. Verfahren zur Fertigung einer optischen Anordnung eines Lichtmoduls, insbesondere zur Beleuchtung und/oder Signalisierung, insbesondere für ein Kraftfahrzeug, wobei das Verfahren die folgenden Schritte beinhaltet:
- Herstellen eines Rahmens (601);
- Anspritzen eines optischen Elements auf den Rahmen (602) ;
wobei der Rahmen so hergestellt ist, dass er während des Schritts des Anspritzens des optischen Elements auf den Rahmen eine mechanische Befestigung zwischen dem Rahmen und dem optischen Element herstellt,
wobei das Herstellen des Rahmens das Bohren mindestens einer Öffnung beinhaltet, wobei die Öffnung nach dem Anspritzen des optischen Elements auf den Rahmen die mechanische Befestigung zwischen dem Rahmen und dem optischen Element herstellt, und
wobei die mindestens eine Öffnung eine Durchgangsöffnung beinhaltet, sodass das optische Element den Rahmen nach dem Anspritzen teilweise umgibt,
wobei das Herstellen des Rahmens ferner das Bohren einer mittigen Öffnung beinhaltet, die so eingerichtet ist, dass einem Licht der Durchgang durch das optische Element ermöglicht wird.

9. Verfahren nach Anspruch 8, wobei das Herstellen des Rahmens (601) mit Hilfe eines thermoplastischen Materials durchgeführt wird und das Anspritzen des optischen Elements auf den Rahmen (602) mit Hilfe von Silikon durchgeführt wird.

10. Verfahren nach einem der Ansprüche 8 bis 9, das ferner einen Schritt des Verbindens eines zweiten optischen Elements mit dem Rahmen beinhaltet, um durch die Einrichtung des zweiten optischen Elements relativ zu dem optischen Element eine optische Funktion bereitzustellen.

## Claims

1. Optical assembly (100) of a light-emitting module, especially of a lighting and/or signalling module, in particular for a motor vehicle, comprising:
- an optical element (102, 303, 401, 411, 421);
- a frame (101, 301, 402, 412, 422);
said optical element being overmoulded on the frame,
said frame being shaped so as to make a mechanical attachment between the frame and the optical element following the overmoulding of the optical element on the frame,
at least one contact surface of the frame (101, 301, 402, 412, 422) with the optical element (102, 303, 401, 411, 421) comprising at least one hole, in which the hole makes the mechanical attachment between the frame and the optical element following the overmoulding of the optical element on the frame, **characterized in that** said at least one hole comprises a through-hole so that, following the overmoulding, the optical element (102, 303, 401, 411, 421) partially surrounds the frame (101, 301, 402, 412, 422),
and **in that** the frame comprises a central hole arranged so as to enable light to pass through the optical element.

2. Assembly according to Claim 1, in which the frame (101, 301, 402, 412, 422) comprises at least eight holes distributed substantially uniformly around the central hole.

3. Assembly according to Claim 2, in which the frame (101, 301, 402, 412, 422) comprises at least sixteen holes distributed substantially uniformly around the central hole.

4. Assembly according to Claim 3, in which the frame (101, 301, 402, 412, 422) comprises at least twenty holes distributed substantially uniformly around the central hole.

5. Assembly according to one of the preceding claims, in which at least one contact surface of the frame with the optical element (102, 303, 401, 411, 421) comprises at least one asperity, in which the asperity makes the mechanical attachment between the frame (101, 301, 402, 412, 422) and the optical element following the overmoulding of the optical element on the frame.

6. Assembly according to one of the preceding claims, in which said frame (101, 301, 402, 412, 422) is made of a thermoplastic material and the optical element is made of silicone.

7. Assembly according to one of the preceding claims, in which said frame (101, 301, 402, 412, 422) is further connected to a second optical element, so as to carry out an optical function by arranging the second optical element relative to the optical element.

8. Process for manufacturing an optical assembly of a light-emitting module, especially of a lighting and/or signalling module, in particular for a motor vehicle, in which the process comprises the steps of:
- producing a frame (601);
- overmoulding an optical element on said frame (602);
said frame being produced so as to make a mechanical attachment between the frame and the optical element during the step of overmoulding the optical element on the frame
the production of the frame comprising the drilling of at least one hole, in which the hole makes the mechanical attachment between the frame and the optical element following the overmoulding of the optical element on the frame, and
said at least one hole comprising a through-hole so that, following the overmoulding, the optical element partially surrounds the frame,
the production of the frame further comprises the drilling of a central hole arranged so as to enable light to pass through the optical element.

9. Process according to Claim 8, in which the production of the frame (601) is carried out using a thermoplastic material and the overmoulding of said optical element on said frame (602) is carried out using silicone.

10. Process according to one of Claims 8 to 9, further comprising a step of connecting a second optical element to said frame, so as to carry out an optical function by arranging the second optical element relative to the optical element.
